Europäisches Patentamt

European Patent Office

Office européen des brevets

(11) Veröffentlichungsnummer : **0 022 178**
**B1**

# (12) EUROPÄISCHE PATENTSCHRIFT

(45) Veröffentlichungstag der Patentschrift :
11.08.82

(21) Anmeldenummer : 80103122.0

(22) Anmeldetag : 04.06.80

(51) Int. Cl.³ : **B 01 D 53/02**

(54) Zyklisches Adsorptionsverfahren zum Zerlegen eines Gasgemisches.

(30) Priorität : 08.06.79 DE 2923325

(43) Veröffentlichungstag der Anmeldung :
14.01.81 (Patentblatt 81/02)

(45) Bekanntmachung des Hinweises auf die Patenterteilung : 11.08.82 Patentblatt 82/32

(84) Benannte Vertragsstaaten :
BE CH DE FR GB LI NL

(56) Entgegenhaltungen :
DE - A - 2 352 075
DE - A - 2 441 447
DE - A - 2 631 890
DE - A - 2 707 745
DE - A - 2 855 626

(73) Patentinhaber : Linde Aktiengesellschaft
Abraham-Lincoln-Strasse 21
D-6200 Wiesbaden (DE)

(72) Erfinder : Leitgeb, Paul, Dr.
Schlegelstrasse 7
D-8000 München 70 (DE)

(74) Vertreter : Schaefer, Gerhard, Dr.
Linde Aktiengesellschaft Zentrale Patentabteilung
D-8023 Höllriegelskreuth (DE)

Zyklisches Adsorptionsverfahren zum Zerlegen eines Gasgemisches

Die Erfindung betrifft ein zyklisches Adsorptionsverfahren zum Zerlegen oder Reinigen eines Gasgemisches gemäß dem Oberbegriff des Patentanspruchs 1.

Neben den sehr häufig angewandten Adsorptionsverfahren, bei denen die Trennwirkung bezüglich der Komponenten bestimmter Gasgemische auf der unterschiedlichen Gleichgewichtsbeladung des verwendeten Adsorptionsmittels bezüglich dieser Komponenten beruht, sind auch solche Adsorptionsverfahren im Gebrauch, deren Wirkung auf die unterschiedlichen Adsorptionsgeschwindigkeiten der zu trennenden Komponenten an dem jeweiligen Adsorptionsmittel zurückzuführen ist. Mit Hilfe der zuletzt genannten Verfahren ist es demnach möglich, gasförmige Komponenten voneinander zu trennen, deren Gleichgewichtsbeladungen bezüglich des verwendeten Adsorptionsmittels dies nicht zulassen würden, sofern die Einstellung des Gleichgewichts nur mit ausreichend unterschiedlichen Geschwindigkeiten stattfindet. Als Beispiel sei die Zerlegung von Luft durch Adsorption von $O_2$ an Kohlenstoff-Molekularsieben genannt, die zu Beginn der Adsorption bezüglich des Stickstoffs und des Sauerstoffs stark unterschiedliche Adsorptionsgeschwindigkeiten aufweisen. Ein derartiges Luftzerlegungsverfahren ist beispielsweise in der DE-OS 27 02 785 beschrieben.

Häufig stellt sich in der Praxis die Aufgabe, die aus einem solchen Adsorptionsverfahren abströmende Produktgasmenge einem zeitlich schwankenden Bedarf anzupassen, ohne die Produktgasreinheit bezüglich der adsorptiv abzutrennenden Komponente zu verändern. Im allgemeinen werden solche, zyklisch etwa im Druckwechselverfahren betriebenen Adsorptionsanlagen bei vorgegebener Produktgasreinheit auf die Abgabe einer bestimmten Produktgasmenge optimiert. Es ergibt sich bei Anwendung der Adsorptionsverfahren, die den auf unterschiedlichen Adsorptionsgeschwindigkeiten beruhenden kinetischen Effekt ausnutzen, daß die Schaltzyklen nicht zu lang und die Strömungsgeschwindigkeiten nicht zu niedrig sein dürfen, weil andernfalls der erwähnte kinetische Effekt nicht oder nicht in dem gewünschten Ausmaß eintreten würde. Soll nun von dem der optimierten Auslegung entsprechenden Nennbetrieb in Sinne abnehmenden Produktgasbedarfs abgewichen, d.h. im Teillastbetrieb gefahren werden, so wird bislang so vorgegangen, daß die Anlage, in entsprechenden Zeitabständen vorübergehend abgeschaltet und die dazwischen anfallenden Produktgasmengen in Zwischenspeichern gesammelt werden. Abgesehen von dem mit diesen Behältern verbundenen Investitionsaufwand ergibt sich als weiterer Nachteil dieser Verfahrensweise, daß bei jedem erneuten Wiederanfahren der Anlage erst eine gewisse Zeit verstreicht, bis das Produktgas die gewünschte Reinheit erlangt hat.

Der Erfindung liegt daher die Aufgabe zugrunde, ein Verfahren der eingangs genannten Art bereitzustellen, das eine ökonomische und flexible Regelung in Abhängigkeit vom jeweiligen Produktgasbedarf ermöglicht.

Diese Aufgabe wird erfindungsgemäß dadurch gelöst, daß bei verringertem oder erhöhtem Produktgasbedarf die Adsorptionsphasen mit längerer bzw. kürzerer Dauer und verringerter bzw. erhöhter Durchströmgeschwindigkeit betrieben werden.

Es wurde überraschenderweise gefunden, daß eine Regelung der Produktgasmenge durch die erfindungsgemäß vorgesehenen Maßnahmen in einem weiten Bereich möglich ist, ohne daß die Trennwirkung dadurch beeinträchtigt würde. Dies war insofern nicht voraussehbar, als bei einer Verlängerung der Kontaktzeit zwischen dem Gasgemisch und dem Adsorptionsmittel mit einem Verschwinden des kinetischen Effektes und damit der Trennwirkung zu rechnen war. Das erfindungsgemäße Verfahren ermöglicht also eine flexible und vor allem kontinuierliche sowie trägheitsarme Anpassung an einen schwankenden Produktgasbedarf.

Die Wirkung des erfindungsgemäßen Verfahrens beruht im wesentlichen auf der Art der Durchführung der Adsorptionsphase, während die Art der Regenerierung keinen Einfluß hat. Es ist somit unerheblich, ob bei Anwendung etwa eines Druckwechselverfahrens im Vakuum, bei Atmosphärendruck oder durch Einleiten eines Spülgases desorbiert wird. Auch die Verwendung eines geheizten Spülgases oder die direkte Heizung des Adsorptionsmittels mit anschließender Rückkühlung is nicht ausgeschlossen.

Der Anwendungsbereich der Erfindung umfaßt vor allem den Teillastbetrieb, bei dem eine gegenüber dem Nennbetrieb verringerte Produktgasmenge verlangt wird. Die Erfindung erstreckt sich zwar auch auf den Überlastbetrieb, bei dem eine gegenüber dem Nennbetrieb erhöhte Produktgasmenge abströmt, jedoch ist dieser Fall in der Praxis von untergeordneter Bedeutung, da die Adsorptionsanlagen im allgemeinen so ausgelegt sein werden, daß eine Überschreitung der Nennlast nur in geringem Ausmaße möglich ist.

Gemäß einer vorteilhaften Ausgestaltung der Erfindung soll so vorgegangen werden, daß die Durchströmgeschwindigkeit bei vorgegebenen Reinheitsgrad des Produktgases durch Regelung der Menge des während der Adsorptionsphase aus der Adsorptionsmittelschüttung abgezogenen Produktgasstromes und die Menge des während der Adsorptionsphase in die Adsorptionsmittelschüttung einzuführenden, verdichteten Gasgemisches in Abhängigkeit von der abgezogenen Produktgasmenge eingestellt wird.

Wie entsprechende Messungen ergeben haben, lassen sich für jede vorgegebene Produktgasreinheit funktionelle Zusammenhänge zwischen abzuziehender Produktgasmenge und Zyklusdauer einerseits sowie einzuspeisender Rohgasmenge andererseits ermitteln. In die das Produktgas abführende Produktgasleitung ist somit lediglich eine Vorrichtung zur Entnahme von Proben zum Zwecke der Reinheitskontrolle sowie ein regelbares Ventil einzubauen. Öffnungsgrad und Öffnungsdauer dieses Ventils sind dabei nach Vorgabe der gewünschten Produktgasreinheit gemäß dem erwähnten funktionellen Zusammenhang zwischen Zyklusdauer und abzuziehender Produktgasmenge zu koppeln. Zyklusdauer und Dauer der Adsorptionsphase stehen selbstverständlich in einem bekannten Zusammenhang, und im allgemeinen wird die Dauer der Adsorptionsphase einen festen Bruchteil der Zyklusdauer ausmachen. Der Mengendurchsatz des Kompressors, der das auf den Adsorptionsdruck verdichtete Rohgasgemisch liefert, wird zweckmäßig in Abhängigkeit von der Menge des abgezogenen Produktgases geregelt. Dabei wird im allgemeinen ein linearer Zusammenhang bestehen, und zwar im Sinne abnehmender Rohgasmengen bei abnehmenden Produktgasmengen.

Das erfindungsgemäße Verfahren ist insbesondere dann mit Vorteil anwendbar, wenn als Adsorptionsmittel Kohlenstoff-Molekularsiebe verwendet werden. Bei diesen treten aufgrund der ihnen eigentümlichen Porenstruktur kinetische, d.h. auf unterschiedlichen Adsorptions- bzw. Diffusionsgeschwindigkeiten beruhende Effekte in besonderem Ausmaß auf. Dabei bietet sich insbesondere die Verwendung von Luft als zu zerlegendes Gasgemisch an, da die adsorptive Luftzerlegung zunehmend an Bedeutung gewinnt. Als Produktgas wird dabei angereicherter Stickstoff abgezogen. Die als Restgas anfallende Fraktion besteht aus angereichertem Sauerstoff und kann zum Zwecke der stärkeren Konzentrierung des Sauerstoffs weiterbehandelt werden. Die Zerlegung von Luft mittels Kohlenstoff-Molekularsieben stellt jedoch nicht die einzige Möglichkeit zur Anwendung des erfindungsgemäßen Verfahrens dar. Vielmehr kann dieses überall dort zur Anwendung kommen, wo bei der Adsorption gewisser, zu trennender Komponenten an einem bestimmten Adsorptionsmittel die oben erwähnten kinetischen Effekte auftreten. So können an Kohlenstoff-Molekularsieben z.B. auch Sauerstoff aus Rohargon oder Stickstoff aus Erdgas abgetrennt werden.

Die Anwendbarkeit des erfindungsgemäßen Verfahrens zum Zweck der Luftzerlegung wurde an Kohlenstoff-Molekularsieben als einem typischen Vertreter der Adsorptionsmittel, an denen kinetische Effekte der oben erwähnten Art zu beobachten sind, erprobt. Dabei wurden zwei im Druckwechselverfahren betriebene Adsorber verwendet. Innerhalb eines Adsorptionszyklus folgte auf die mit leicht ansteigendem Druck betriebene Adsorptionsphase, an deren Ende ein Druck von 6,0 bar erreicht war, eine schnelle Druckentlastung auf 3,5 bar, eine unter Abgabe eines sauerstoffhaltigen Restgases bei weiter sinkendem Druck betriebene Desorptionsphase, an deren Ende der Druck auf 0,95 bar gesunken war, eine schnelle, im Druckausgleich mit der Druckentlastungsphase des jeweils anderen Adsorbers betriebene erste Druckaufbauphase bis zu einem ersten Zwischendruck von 3,5 bar, eine unter Einleiten von Rohluft auf einen zweiten Zwischendruck von 4,2 bar führende zweite Druckaufbauphase sowie eine weitere Adsorptionsphase. Der Druckausgleich erfolgte gleichzeitig über die Auslaß- und die Einlaßenden der betreffenden Adsorber, während die zweite Druckaufbauphase im Gleichstrom durchgeführt wurde, wobei sich die Bezeichnung « Gleichstrom » auf die während der Adsorptionsphase herrschende Strömungsrichtung bezieht. Bei einer Zyklusdauer von beispielsweise 2 Minuten betrug die Dauer für die Adsorptionsphase 54 sec., für die Druckentlastungsphase sowie die erste Druckaufbauphase 3 sec., für die Desorptionsphase 57 sec. und für die zweite Druckaufbauphase 3 sec. Bei Veränderung der Zyklusdauer wurden jeweils die Zeiten für die Druckentlastung phase und die Druckaufbauphasen konstant gehalten und die Zeiten für die Adsorptions- und Desorptionsphasen entsprechend geändert. Die Adsorptionstemperatur betrug 313 K.

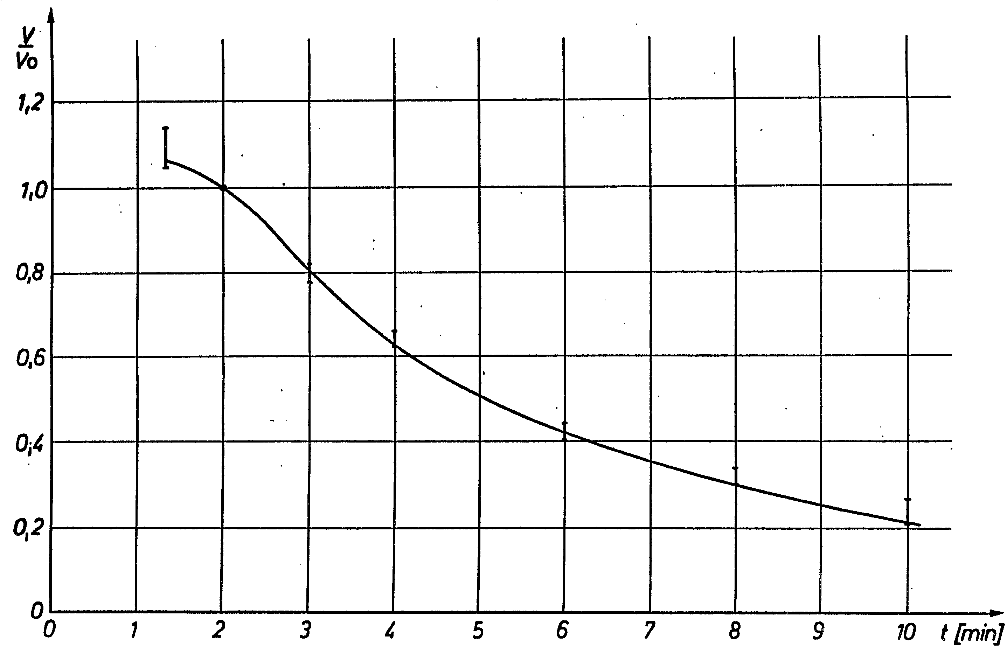

Mit Hilfe eines in die Produktgasleitung eingebauten regelbaren Drosselventils konnte die abgezogene Produktgasmenge, und mit Hilfe eines regelbaren Rohgaskompressors die Rohluftzufuhr beeinflußt werden. Weiterhin bestand die Möglichkeit, die Zyklusdauer und damit die Länge der Adsorptionsphasen zu verändern. Die Zusammensetzung des Produktgases konnte laufend gemessen werden. Die Zyklusdauern wurden in einem Bereich von 1,33 bis 10 Minuten, die Sauerstoffgehalte im stickstoffreichen Produktgas in einem Bereich von 0,2 bis 4 Vol.% variiert. Zu den Wertepaaren Sauerstoff-Restgehalt/Zyklusdauer wurden jeweils die zugehörigen Werte für die Produktgasmenge bestimmt. Aus diesen umfangreichen Messungen konnte die in der Abbildung wiedergegebene Kurve erschlossen werden, die die Verhältnisse nahezu unabhängig von der Produktgasreinheit wiedergibt. Auf der Ordinate ist die abgezogene Produktgasmenge $V$, bezogen auf eine Produktgasmenge $V_o$, die allerdings von der Produktgasreinheit abhängt, auf der Abszisse die Zyklusdauer in Minuten aufgetragen. $V_o$ stellt den Wert der abgezogenen Produktgasmenge dar, der sich in abhängigkeit von der gewählten Produktgasreinheit bei einer Zyklusdauer von 2 Minuten einstellt. $V_o$ steigt mit abnehmender Produktgasreinheit an.

Der Nennlastbetrieb liegt bei $V = V_o$ und einer Zyklusdauer von 2 Minuten. Die Kurve umfaßt den Bereich von einem die Nennlast um ca. 10 % übersteigenden Überlastbetrieb bis zu einem Teillastbetrieb von nur mehr. ca. 25 % der Nennlast. Die bei den einzelnen Meßpunkten für die Zyklusdauer im Kurvenbereich eingetragenen, kurzen senkrechten Balken geben an, wie groß die in Abhängigkeit von der Produktgasreinheit auftretenden Schwankungen sind. Demnach lassen sich die ermittelten Meßwerte innerhalb des untersuchten Reinheitsbereiches von 0,2 bis 4 Vol.-% Sauerstoffanteil im Produktstickstoff in sehr guter Annäherung durch die in der Abbildung gezeigte Kurve wiedergeben, und zwar aufgrund der Normierung der Ordinatenwerte $V/V_0$. Der Kurve ist weiterhin zu entnehmen, daß die Zyklusdauer und damit die Dauer der Adsorptionsphasen ohne Beeinträchtigung der gewünschten Produktreinheit gegenüber dem Nennlastbetrieb um über 400 % gesteigert werden kann, wobei die abgezogene Produktgasmenge auf weniger als ein Viertel absinkt.

Die Rohgaszufuhr wurde bei Veränderung der übrigen Verfahrensvariablen bzw. -parameter jeweils so eingeregelt, daß ein konstanter Adsorptionsenddruck von 6 bar eingehalten wurde. Daher nahm bei sinkenden Mengen abgezogenen Produktgases auch die Durchströmgeschwindigkeit ab. Beide Größen erwiesen sich, ebenso wie die abgezogenen Produktgasmenge einerseits und die zuzuführende Menge an verdichteter Rohluft andererseits, als direkt proportional.

## Ansprüche

1. Zyklisches Adsorptionsverfahren zum Zerlegen oder Reinigen eines Gasgemisches mit Hilfe eines Adsorptionsmittels, dessen Trennwirkung für die im Gasgemisch enthaltenden Komponenten auf den unterschiedlichen Adsorptionsgeschwindigkeiten dieser Komponenten beruht, wobei im Zuge eines Adsorptionszyklus das Gasgemisch zunächst während einer Adsorptionsphase eine Adsorptionsmittelschüttung durchströmt, aus dieser gleichzeitig ein an den nicht oder in geringerem Maße adsorbierten Komponenten angereicherter Produktgasstrom abgezogen wird und die Schüttung anschließend eine Regenerationsphase durchläuft, dadurch gekennzeichnet, daß bei verringertem oder erhöhtem Produktgasbedarf die Adsorptionsphasen mit längerer bzw. kürzerer Dauer und verringerter bzw. erhöhter Durchströmgeschwindigkeit betrieben werden.

2. Verfahren nach Anspruch 1, dadurch gekennzeichnet, daß die Durchströmgeschwindigkeit bei vorgegebenem Reinheitsgrad des Produktgases durch Regelung der Menge des während der Adsorptionsphase aus der Adsorptionsmittelschüttung abgezogenen Produktgasstromes und die Menge des während der Adsorptionsphase in die Adsorptionsmittelschüttung einzuführenden, verdichteten Gasgemisches in Abhängigkeit von der abgezogenen Produktgasmenge eingestellt wird.

3. Verfahren nach Anspruch 1 oder 2, dadurch gekennzeichnet, daß als Adsorptionsmittel Kohlenstoff-Molekularsiebe verwendet werden.

4. Verfahren nach Anspruch 3, dadurch gekennzeichnet, daß als zu zerlegendes Gasgemisch Luft verwendet und als Produktgas angereicherter Stickstoff abgezogen wird.

## Claims

1. A cyclic adsorption process for separating or purifying a gas mixture with the aid of an adsorbent, the separating effect of which on the components contained in the gas mixture is based on the different adsorption speeds of these components, wherein in the course of an adsorption cycle, the gas mixture first flows through a charge of adsorbent during an adsorption phase, a product gas stream enriched in components which are not adsorbed or are adsorbed only to a small extent, simultaneously being withdrawn, and wherein the charge subsequently passes through a regeneration phase, characterised in that in the event of decreased or increased product gas demand, the adsorption phases are operated with longer or shorter durations respectively and at a reduced or increased rate of flow respectively.

2. A process as claimed in Claim 1, characterised in that for a predetermined degree of purity of the product gas, the rate of flow is adjusted by regulating the amount of product gas stream withdrawn from the adsorbent charge during the adsorption phase and the amount of compressed gas mixture which is to be introduced into the adsorbent charge during the adsorption phase, in dependence upon the amount of product gas withdrawn.

3. A process as claimed in Claim 1 or Claim 2, characterised in that carbon molecular sieves are used as adsorbent.

4. A process as claimed in Claim 3, characterised in that air is used as the gas mixture which is to be separated and enriched nitrogen is removed as product gas.

## Revendications

1. Procédé d'adsorption cyclique pour la décomposition ou la purification d'un mélange gazeux à l'aide d'un adsorbant dont l'effet séparateur, sur les composants contenus dans le mélange gazeux, se fonde sur les vitesses d'adsorption différentes de ces composants, tandis que, pendant un cycle d'adsorption, le mélange gazeux traverse d'abord, pendant une phase d'adsorption, un lit d'adsorbant, duquel est extrait simultanément un courant de produit gazeux enrichi en les composants non adsorbés ou faiblement adsorbés, le lit subissant ensuite une phase de régénération, caractérisé en ce que, dans le cas d'une diminution ou d'une augmentation de la demande en produit gazeux, les phases d'adsorption se déroulent pendant un temps respectivement plus long et plus court, à une vitesse de passage plus faible ou plus grande.

2. Procédé selon la revendication 1, caractérisé en ce que la vitesse de passage, pour un degré prédéterminé de pureté du produit gazeux, est réglée par la régulation de la quantité du courant de produit gazeux extrait du lit d'adsorbant pendant la phase d'adsorption, et que la quantité du mélange gazeux concentré devant être introduit pendant la phase d'adsorption dans le lit d'adsorbant est réglée en fonction de la quantité extraite de produit gazeux.

3. Procédé selon l'une quelconque des revendications 1 ou 2, caractérisé en ce que l'adsorbant utilisé est un tamis moléculaire au carbone.

4. Procédé selon la revendication 3, caractérisé en ce que l'on utilise en tant que mélange gazeux à décomposer de l'air, le produit gazeux extrait étant de l'azote enrichi.

0 022 178